# EUROPEAN PATENT APPLICATION

(11) **EP 1 318 577 A2**
(43) Date of publication of application: **11.06.2003**
(21) Application number: 02027079.9
(22) Date of filing: 03.12.2002
(51) Int. Cl.: H01R 35/02

(54) **Rotary connector**

(30) Priority: 06.12.2001 JP 2001373113
(71) Applicant: ALPS ELECTRIC CO., LTD., Tokyo 145-8501 (JP)
(72) Inventor: Oguma, Takashi, Otsuka-cho, Ota-ku, Tokyo 145-8501 (JP); Takahashi, Seishi, Otsuka-cho, Ota-ku, Tokyo 145-8501 (JP)
(74) Representative: Klunker . Schmitt-Nilson . Hirsch

(57) **Abstract**

A rotary connector includes: a movable member having an inner cylinder 1a and a collar; a stationary member having an outer cylinder and a bottom plate; and a flat cable wound in a space between the inner cylinder and the outer cylinder, whose both ends are fixed to the movable member and the stationary member, wherein at an inner peripheral edge of the bottom plate, there exists an engaging portion for rotatively engaging with the collar, wherein on an outer surface side of the collar, there exists a projection to be brought about by a spotted surface during mold resin forming of the collar, and wherein on a wall which is opposite to the projection, there is provided a relief portion.

## Description

### BACKGROUND OF THE INVENTION

### 1. Field of the Invention

The present invention relates to a rotary connector for use in a vehicle, and more particularly to a rotary connector for causing no unusual sound due to rotation of a movable member of the rotary connector.

### 2. Description of the Related Art

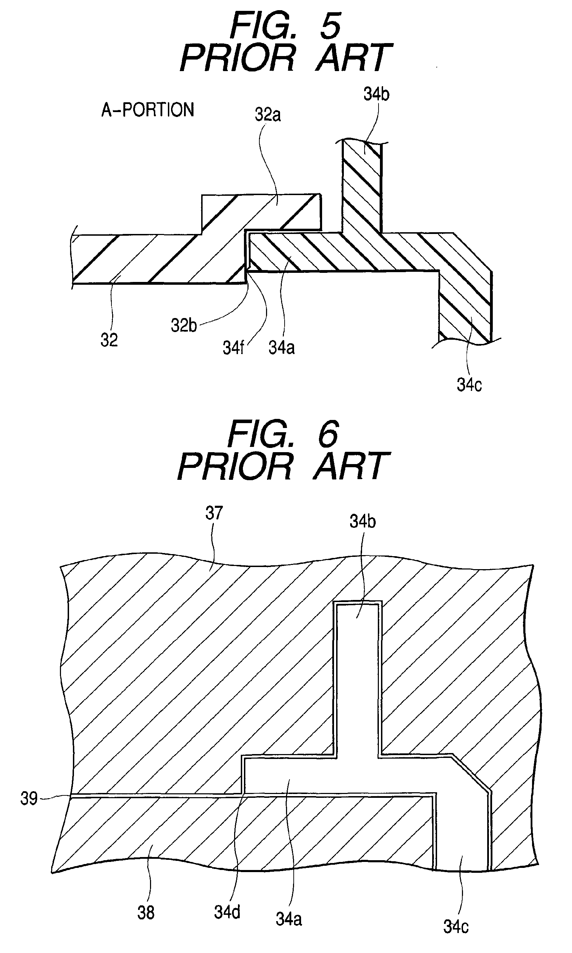

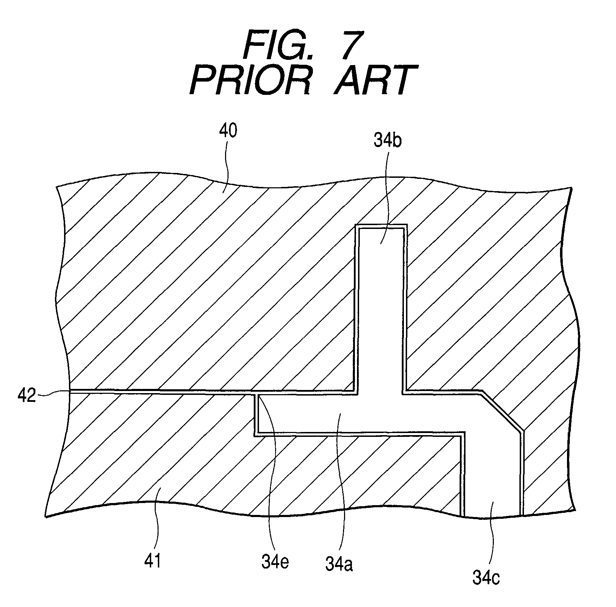

A conventional rotary connector will be described with reference to Figs. 4 to 7. Fig. 4 is a cross sectional view showing the conventional rotary connector, Fig. 5 is an enlarged view showing an A-portion of Fig. 4, Fig. 6 is an explanatory view illustrating spotting of a first resin mold die, and Fig. 7 is an explanatory view illustrating spotting of a second resin mold die.

The rotary connector is made up of a movable member 31, a stationary member 32, a guide member 33, a rotor snap 34 and a flat cable 35.

The movable member 31 is made of insulating resin and is shaped like a cylinder. The movable member 31 is rotationally driven by a steering wheel of a vehicle.

The stationary member 32 is made of insulating resin and is shaped like a cylinder, having a collar 32a on an inner periphery side thereof. The movable member 31 is rotatively mounted to the stationary member 32.

The rotor snap 34 is made of insulating resin, and is formed of: an upper cylinder 34b to be fixed to the movable member 31; a lower cylinder 34c extending downward from an upper cylinder 34b; and a collar 34a extending on the outer periphery side from the border line between the upper cylinder 34b and the lower cylinder 34c. With the movable member 31, a collar 32a of the stationary member 32 on the inner periphery side is pinched to thereby connect the stationary member 32 to the movable member 31 for rotation.

The guide member 33 is made of insulating resin, and is shaped like a ring. The guide member 33 is rotatable relative to the stationary member 32 as well as the movable member 31, and is adapted to rotate at a number of revolutions smaller than that of the movable member 31.

The flat cable 35 is obtained by sandwiching a plurality of conductive material threads between two sheets of belt-shaped insulating sheets. The flat cable 35 is wound and arranged within an annular space 36 between the movable member 31 and the stationary member 32 and is guided in such a manner as to be pressed against the inner periphery side and the outer periphery side of the space 36 by means of the guide member 33.

Resin mold formation of the rotor snap 34 will be described with reference to Figs. 6 and 7. In a first resin mold die shown in Fig. 6, a spotted surface 39 between an upper die 37 and a lower die 38 is located at the lower surface of the collar 34a. When this spotted surface 39 is closed to put molten resin inside and the upper and lower dies are opened, at the end 34d of the lower surface of the collar 34a, a projection 34f (See Fig. 5) projecting from the collar 34a in the direction of the spotted surface 39 is prone to occur.

In a second resin mold die shown in Fig. 7, a spotted surface 42 between an upper die 40 and a lower die 41 is located on the upper surface of the collar 34a. When this spotted surface 42 is closed to put molten resin inside and the upper and lower dies are opened, at the end 34d of the upper surface of the collar 34a, a projection projecting from the collar 34a in the direction of the spotted surface 42 is prone to occur.

Fig. 5 is an enlarged view for the A-portion of Fig. 4 showing a state in which a rotor snap 34 manufactured by the first resin mold die and a portion of the collar 32a of the stationary member 32 on the inner periphery side are engaged with each other. At the tip end of the collar 34a of the rotor snap 34 on the lower surface side, there is formed a projection 34f due to resin mold forming, which is in contact with a wall 32b of the stationary member 32 in opposite thereto. When the rotor snap 34 is formed by means of the second resin mold die, the projection is formed at the tip end of the collar 34a of the rotor snap 34 on the upper surface side, which is in contact with the wall 32b in opposite thereto.

In the above-described conventional rotary connector, however, at the tip end of the collar 34a of the rotor snap 34 on the lower surface side, a projection 34f is formed due to the resin mold forming. When a portion of the movable member 31 or the stationary member 32 becomes deformed due to warp or the like or the movable member 31 is decentered due to an assembly error or the like for rotation, the projection 34f abuts upon the wall 32b of the stationary member 32 which is opposite thereto, whereby when the rotor snap 43 rotates together with the movable member 31, the projection 34f slides over the wall 32b of the stationary member 32 to cause an unusual sound. Even in the rotor snap manufactured by means of the second resin mold die, since the projection is similarly formed and abuts upon the wall 32b of the stationary member 32 opposite thereto for sliding, an unusual sound is caused.

### SUMMARY OF THE INVENTION

Accordingly, it is an object of the present invention to provide a rotary connector for causing no unusual sound when the movable member is rotated even if a portion of the movable member or the stationary member becomes deformed due to warp or the like, or the movable member is decentered due to an assembly error or the like.

According to the present invention, there is provided a rotary connector, including: a movable member having an inner cylinder and a collar; a stationary member having an outer cylinder and a bottom plate; and a flat cable wound in a space between the inner cylinder and the outer cylinder, whose both ends are fixed to the movable member and the stationary member, wherein at an inner peripheral edge of the bottom plate, there exists an engaging portion for rotatively engaging with the collar, wherein on an outer surface side of the collar, there exists a projection to be brought about by a spotted surface during mold resin forming of the collar, and wherein on a wall which is opposite to the projection, there is provided a relief portion.

According to this structure, it is possible to provide a rotary connector which causes no unusual sound when the movable member is rotated.

Also, at an angle portion located on the outer surface side of the collar, there exists the projection, and on the wall which is opposite to the angle portion, there is provided a slope on an open end side of the wall to form the relief portion.

According to this structure, since the relief portion is provided on the wall which is opposite to the angle portion having the projection, it is possible to provide a rotary connector causing no unusual sound when the movable member is rotated without the projection and the wall being in contact with each other.

Also, the relief portion is made into a rounded portion formed on the open end side of the wall.

According to this structure, since a rounded portion is provided on the open end side of the wall to form the relief portion, it is possible to provide a rotary connector causing no unusual sound when the movable member is rotated without the projection and the wall being in contact with each other.

### BRIEF DESCRIPTION OF THE DRAWINGS

Fig. 1 is a cross sectional view showing an embodiment of a rotary connector according to the present invention;
Fig. 2 is an enlarged view showing the B-portion of Fig. 1;
Fig. 3 is an enlarged view showing a portion corresponding to Fig. 2 in a variation of the embodiment of the rotary connector according to the present invention;
Fig. 4 is a cross sectional view showing a conventional rotary connector;
Fig. 5 is an enlarged view showing the A-portion of Fig. 4 of the conventional rotary connector;
Fig. 6 is an explanatory view illustrating spotting of a conventional first resin mold die; and
Fig. 7 is an explanatory view illustrating spotting of a conventional second resin mold die.

### DETAILED DESCRIPTION OF THE PREFERRED EMBODIMENTS

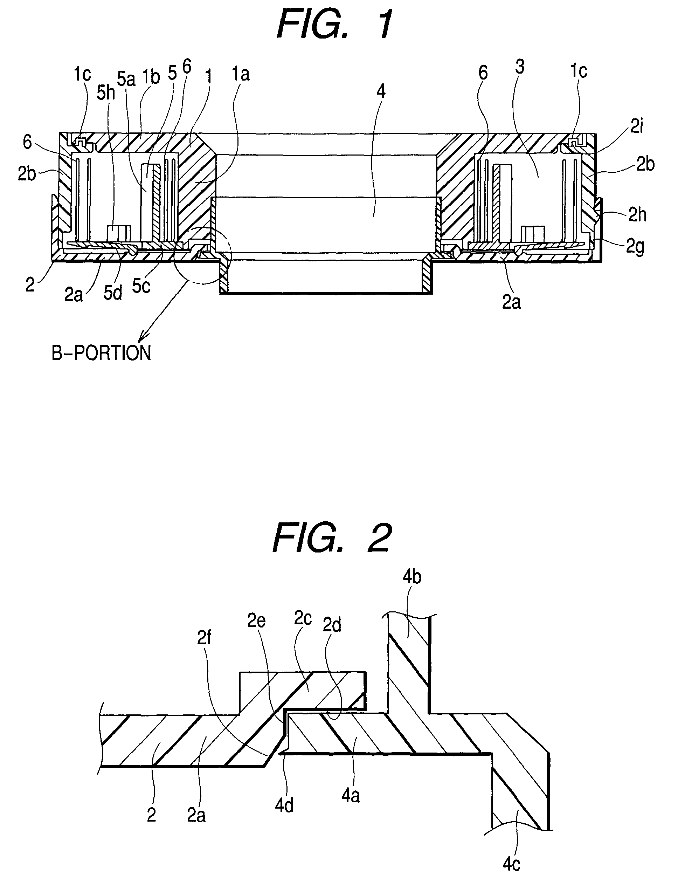

A rotary connector according to the present invention will be described with reference to Figs. 1 and 2. Fig. 1 is a cross sectional view showing an embodiment of a rotary connector according to the present invention, and Fig. 2 is an enlarged view showing the B-portion of Fig. 1.

A movable member 1 is made of insulating resin, an inner cylinder 1a is provided in the center, and at the upper end of the inner cylinder 1a, an annular top plate 1b is integrally formed toward the outside radially. On the outer peripheral edge of the top plate 1b, there is provided an annular recess 1c on the lower surface side of the top plate 1b. The movable member 1 is rotationally driven by a steering wheel of a vehicle.

The stationary member 2 is made of insulating resin, and has a bottom plate 2a and an outer cylinder 2b connected to the bottom plate 2a. In the bottom plate 2a, the bottom thereof is raised in order that the inner peripheral edge makes a difference in level to form a collar 2c; on the lower surface side of the collar 2c, there exists an engaging portion 2d; and on the open end side of the wall 2e which forms the engaging portion 2d, there is formed a slope 2f. On the outer peripheral edge of the bottom plate 2a, there is provided a snap engaging hole 2g vertically extending upward. On the outer cylinder 2b, there is provided a snap engaging projection 2h, and the snap engaging hole 2g and the snap engaging projection 2h are snap-engaged with each other to connect the bottom plate 2a to the outer cylinder 2b for fixing. At the upper end of the outer cylinder 2b, there is formed an annular projection 2i. The annular projection 2i of the stationary member 2 is engaged with the annular recess 1c of the movable member 1 to guide the movable member 1 in a radial direction. The stationary member 2 and the movable member 1 form an annular space 3 therebetween.

The rotor snap 4 is made of insulating resin, and is integrally formed of: an upper cylinder 4b to be fixed to the movable member 1; a lower cylinder 4c extending downward from the upper cylinder 4b; and a collar 4a extending from the border line between the upper cylinder 4b and the lower cylinder 4c on the outer periphery side by means of the mold resin forming. With the engaging portion 2d provided on the lower surface side of the bottom plate 2a of the stationary member 2, a collar 4a is rotatively engaged, and at the angle portion of the collar 4a on the lower end side, there is formed a projection 4d formed by the mold resin forming. A portion of the wall 2e of the stationary member 2 which is opposite to the projection 4d is a slope 2f, which serves as a relief portion for avoiding the contact with the projection 4d. Even if a top plate 1b of the movable member 1 or a bottom plate 2a of the stationary member 2 becomes deformed due to warp or the like , or the movable member 1 is decentered due to an assembly error or the like, the slope 2f which serves as the relief portion causes the projection 4d not to abut upon the stationary member 2, and even if the rotor snap 4 rotates, the projection 4d does not come into contact with the stationary member 2 to cause no unusual sound. The rotor snap 4 pinches the collar 2c of the stationary member 2 on the inner periphery side with the movable member 1 to connect the stationary member 2 to the movable member 1 for rotation.

The guide member 5 is made of insulating resin, is shaped like a ring, and has an inner diameter-side guide 5a and an outer diameter-side guide which are formed on an annular plate 5c. On the annular plate 5c, there is formed a spring-shaped portion 5d, and functions to raise the outer periphery side of the annular plate 5c from the bottom plate 2a. The guide member 5 is rotatable relative to the stationary member 2 as well as the movable member 1, and is adapted to rotate at a number of revolutions smaller than that of the movable member 1.

A flat cable 6 is obtained by sandwiching a plurality of conductive material threads between two sheets of belt-shaped insulating sheets. The flat cable 6 is wound and arranged within an annular space 3 between the movable member 1 and the stationary member 2. In the wound flat cable 6, an inner diameter-side flat cable 6 is pressed against the inner diameter side by an inner diameter-side guide 5a of the guide member 5, and an outer diameter-side flat cable 6 is pressed against the outer diameter side by the outer diameter-side guide.

As described above, the rotary connector according to the embodiment of the present invention is constructed.

In this respect, in the above-described embodiment of the present invention, the slope 2f provided on the wall 2e of the stationary member 2 has been used as the relief portion, but the present invention is not limited thereto, and as the relief portion, a recess may be provided on the wall 2e which is opposite to the projection 4d of the collar 4a so as to prevent the projection 4d from abutting upon the wall 2e.

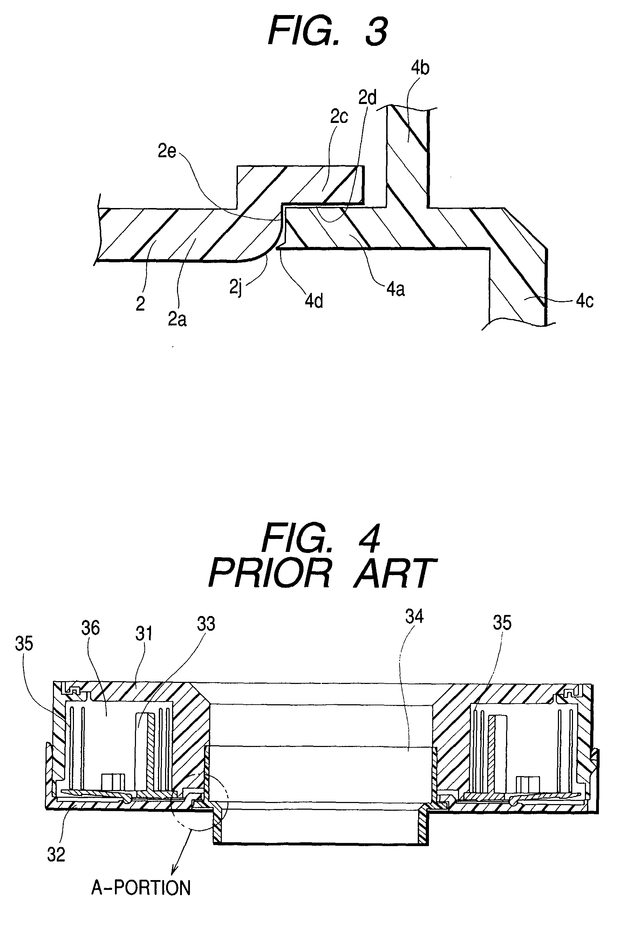

Next, a variation of the rotary connector according to the present invention will be described with reference to Fig. 3. Fig. 3 is an enlarged view showing a portion corresponding to the B-portion of Fig. 1. Portions identical to those in the embodiment according to the present invention are designated by the identical reference numerals for description, and description of those portions will be omitted.

In the bottom plate 2a, the bottom thereof is raised in order that the inner peripheral edge makes a difference in level to form a collar 2c, and on the lower surface side of the collar 2c, there is provided an engaging portion 2d.

The rotor snap 4 is made of insulating resin, and is integrally formed of: an upper cylinder 4b to be fixed to the movable member 1; a lower cylinder 4c extending downward from the upper cylinder 4b; and a collar 4a extending on the outer periphery side from the border line between the upper cylinder 4b and the lower cylinder 4c by means of the mold resin forming. With the engaging portion 2d provided on the lower surface side of the bottom plate 2a of the stationary member 2, the collar 4a is rotatively engaged, and at the angle portion of the collar 4a on the lower end side, there is formed a projection 4d formed by the mold resin forming. A portion of the wall 2e of the stationary member 2 which is opposite to the projection 4d is a rounded portion 2j having a curvature, which serves as a relief portion for avoiding the contact with the projection 4d. As described above, the rounded portion 2j is formed on the open end side of the wall 2e. Even if the top plate 1b of the movable member 1 or the bottom plate 2a of the stationary member 2 becomes deformed due to warp or the like, or the movable member 1 is decentered due to an assembly error or the like, the rounded portion 2j which serves as the relief portion does not bring the projection 4d into contact with the stationary member 2 to cause no unusual sound. The above-described slope 2f, recess or rounded portion 2j as the relief portion is formed in order that the spotted surface of resin mold may not be located on those surfaces, and has no projection to be caused by the spotted surface.

The variation of the embodiment of the present invention is constructed as described above.

In the above-described variation according to the embodiment of the present invention, there has been shown an example in which the projection 4d to be brought about by the spotted surface of the mold resin forming is formed on the lower end side of the collar 4a of the rotor snap 4. However, for example, when there is formed a rounded portion on the lower end side or the like of the collar 4a, the spotted surface is often positioned in the vicinity of the rounded portion, and therefore, it is necessary to appropriately form the slope 2f, the recess, the rounded portion or the like, as the relief portion, on the stationary member 2 which is opposite to the projection to be brought about at the position on the spotted surface.

As described above, according to the present invention, there is provided a rotary connector, including: a movable member having an inner cylinder and a collar; a stationary member having an outer cylinder and a bottom plate; and a flat cable wound in a space between the inner cylinder and the outer cylinder, whose both ends are fixed to the movable member and the stationary member, wherein at the inner peripheral edge of the bottom plate, there exists an engaging portion for rotatively engaging with the collar, wherein on the outer surface side of the collar, there exists a projection to be brought about by a spotted surface during mold resin forming of the collar, and wherein on a wall which is opposite to this projection, there is provided a relief portion.

According to this structure, it is possible to provide a rotary connector which causes no unusual sound when the movable member is rotated.

## Claims

1. A rotary connector, comprising: a movable member having an inner cylinder and a collar; a stationary member having an outer cylinder and a bottom plate; and a flat cable wound in a space between the inner cylinder and the outer cylinder, whose both ends are fixed to the movable member and the stationary member, wherein at an inner peripheral edge of the bottom plate, there exists an engaging portion for rotatively engaging with the collar, wherein on an outer surface side of the collar, there exists a projection to be brought about by a matching surface during mold resin forming of the collar, and wherein on a wall which is opposite to the projection, there is provided a relief portion.

2. The rotary connector according to Claim 1, wherein at an angle portion located on the outer surface side of the collar, there exists the projection, and wherein on the wall which is opposite to the angle portion, there is provided a slope on an open end side of the wall to form the relief portion.

3. The rotary connector according to Claim 1 or 2, wherein the relief portion is made into a rounded portion formed on the open end side of the wall.
